(19) Europäisches Patentamt
European Patent Office
Office européen des brevets

(11) **EP 3 178 651 B1**

(12) **EUROPÄISCHE PATENTSCHRIFT**

(45) Veröffentlichungstag und Bekanntmachung des Hinweises auf die Patenterteilung:
**14.08.2024   Patentblatt 2024/33**

(21) Anmeldenummer: **16200384.2**

(22) Anmeldetag: **24.11.2016**

(51) Internationale Patentklassifikation (IPC):
**B32B 27/18** (2006.01)   **B32B 27/20** (2006.01)
**B32B 27/36** (2006.01)   **A47B 96/20** (2006.01)

(52) Gemeinsame Patentklassifikation (CPC):
**B32B 27/18; B29C 48/0018; B29C 48/022;**
**B29C 48/08; B29C 48/21; B29C 48/914;**
**B32B 27/20; B32B 27/36;** B32B 2250/03;
B32B 2250/04; B32B 2250/05; B32B 2250/24;
B32B 2250/244; B32B 2264/10; B32B 2264/104;

(Forts.)

(54) **TRANSPARENTE, BIAXIAL ORIENTIERTE POLYESTERFOLIE MIT EINSEITIG GLATTER OBERFLÄCHE UND GUTER WICKELBARKEIT**

TRANSPARENT, BIAXIALLY ORIENTED POLYESTER FILM WITH A SMOOTH SURFACE ON ONE SIDE AND GOOD COILABILITY

FILM POLYESTER TRANSPARENT À ORIENTATION BIAXIALE AYANT UNE SURFACE LISSE D'UN SEUL CÔTÉ ET AYANT UNE BONNE DRAPABILITÉ

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.11.2015   DE 102015120760**

(43) Veröffentlichungstag der Anmeldung:
**14.06.2017   Patentblatt 2017/24**

(73) Patentinhaber: **Mitsubishi Polyester Film GmbH**
**65203 Wiesbaden (DE)**

(72) Erfinder:
• **Klein, Dagmar**
**55437 Ockenheim (DE)**
• **Kliesch, Holger**
**65462 Ginsheim (DE)**
• **Kuhmann, Bodo**
**65594 Runkel (DE)**
• **Michalski, Artur**
**55435 Gau-Algesheim (DE)**

(74) Vertreter: **Schweitzer, Klaus**
**Plate Schweitzer Zounek**
**Patentanwälte**
**Rheingaustrasse 196**
**65203 Wiesbaden (DE)**

(56) Entgegenhaltungen:
**EP-A1- 1 410 905     EP-A2- 0 947 982**
**EP-A2- 0 983 844     EP-A2- 1 884 357**

EP 3 178 651 B1

(52) Gemeinsame Patentklassifikation (CPC): (Forts.)
B32B 2272/00; B32B 2307/00; B32B 2307/40;
B32B 2307/406; B32B 2307/412; B32B 2307/51;
B32B 2307/518; B32B 2307/538; B32B 2479/00

## Beschreibung

Biaxial orientierte, mindestens dreischichtige, einseitig glatte Polyesterfolie mit mindestens einer Calciumcarbonatpartikel-haltigen Außenschicht sowie Verfahren zu ihrer Herstellung und ihre Verwendung als Prozessfolie zur Übertragung von Oberflächeneigenschaften, insbesondere für Möbeloberflächen.

## Zusammenfassung

Die vorliegende Erfindung betrifft eine einseitig glatte, biaxial orientierte, Polyesterfolie mit hoher Transparenz und einer der glatten Seite gegenüberliegenden Außenschicht mit einem Calciumcarbonatpartikel als Prozesshilfsmittel mit einer Gesamtdicke von 12-75 $\mu$m. Die erfindungsgemäße Folie eignet sich hervorragend zur Übertragung einer glatten, hochglänzenden Oberfläche auf Lacke wie sie insbesondere für Möbeloberflächen gewünscht werden. Die glatte Seite ist dabei weitgehend partikelfrei.

## Beschreibung

Für viele Anwendungen, insbesondere Lacke im Möbelbereich, aber auch andere Kunststoffoberflächen wie zum Beispiel PU-Formteile, ist eine besonders glatte, hochglänzende Oberfläche aus Designgründen erwünscht. Häufig bilden sich jedoch in diesen Lacken oder Kunststoffen Oberflächenunebenheiten beim Aufbringen, so dass in der Praxis häufig mit einer glatten Schablone gearbeitet wird, die ihre Oberfläche auf den Lack oder das Formteil überträgt. Als Schablone eignet sich zum Beispiel eine Polyesterfolie, die zumindest einseitig sehr glatt sein muss, um eine besonders ebene und gleichmäßige Oberfläche mit hohem Glanz zu gewährleisten.

Solche Folien enthalten zweckmäßigerweise aber der glatten Seite gegenüberliegend eine rauere Oberfläche, die den Transport der Folie im Herstellungsprozess und ihr Handling im späteren Verarbeitungsprozess ermöglicht bzw. erleichtert. Zwei pigmentfreie Oberflächen würden auf dem Wickel zudem miteinander verkleben und sich ggf. nur unter Oberflächenbeschädigungen wieder abwickeln lassen.

Folien mit einseitig glatter Oberfläche sind im Stand der Technik bekannt. So ist zum Beispiel in EP-A-1 410 905 eine mehrschichtige Polyesterfolie beschrieben, die eine partikelfreie Oberfläche aufweist. EP-A-1 410 905 beschreibt die Verwendung von Siliziumdioxidpartikeln mit einer Partikelgröße bis zu 4,0 $\mu$m in der rauen Seite, Siliziumdioxidpartikel sind hart und führen unter Druck zu einer Oberflächenverformung, auch auf der gegenüberliegenden, glatten Seite, wenn der Abstand der partikelhaltigen Schichtgrenze bis zur Oberseite der glatten Schicht kleiner als 8$\mu$m ist. Zudem drücken sich diese harten Partikel beim Wickeln der Folie in die glatte Schicht und führen so zu einer Vertiefung in dieser glatten Schicht. Diese verursachen im Lack einen sichtbaren Schaden.

In EP-A-1 884 357 wird ebenfalls eine einseitig glatte Polyesterfolie beschrieben, die eine partikelfreie Oberfläche aufweist und auf der gegenüberliegende Oberfläche als Prozesshilfe ein inkompatibles Polymer enthält, das zur gewünschten Oberflächenrauigkeit, aber auch zur starken Eintrübung der Folie führt. Aufgrund der erheblichen Eintrübung wird das Aushärten des Lackes mit Licht, z.B. UV-Härtung, erheblich erschwert und eine Prozesskontrolle durch die Folie hindurch vor dem Abziehen unmöglich gemacht.

Die EP 0 983 844 A2 beschreibt eine dreischichtige, biaxial orientierte Polyesterfolie, die bei sehr guten elektromagnetischen Eigenschaften gegenüber Folien aus dem Stand der Technik verbesserte Abriebeigenschaften aufweist. Die Folie ist beidseitig aufgebaut aus mindestens einer Basisschicht B und auf dieser Basisschicht aufgebrachten Deckschichten A und C, wobei diese Deckschichten definierte Gasströmungen im Rauhigkeitsprofil aufweist.

In der EP 0 947 982 A2 wird eine biaxial orientierte Polyesterfolie mit einer "rauen" und einer "glatten" Seite offenbart, wobei die "raue" Seite 1000 - 15000 ppm an Partikeln enthält, womit ein Ra-Wert von ≤25 nm erzielt wird.

Die Aufgabe der vorliegenden Erfindung war es daher eine einseitig glatte, biaxial orientierte Polyesterfolie bereitzustellen, die auf der gegenüberliegenden Seite ein geeignetes Partikelsystem aufweist, das sowohl eine wirtschaftliche Herstellung der Folie, als auch Weiterverarbeitung ermöglicht und weiterhin zu einer geringen Eintrübung der Folie führt.

Gelöst wird diese Aufgabe durch eine mindestens dreischichtige biaxial orientierte Polyesterfolie nach Anspruch 1.

Eine solche Folie weist bevorzugt die folgenden Eigenschaften auf:

- Transparenz von 80 bis 95 %
- Trübung von < 7 %
- Eine Gesamtfoliendicke von 12-75 $\mu$m
- Eine glatte Deckschicht mit einer Rauheit Sa < 25 nm, Sp < 500 nm
- Eine glatte Deckschicht, die weniger als 0,1 Gew.-% Partikel enthält
- Eine glatte Deckschicht mit einer Dicke von mindestens 1 $\mu$m

- Eine raue Deckschicht mit einer Rauheit Sa ≥ 25 nm, Sp ≥ 500 nm
- Wobei die raue Deckschicht Calciumcarbonatpartikel einer Größe $d_{50}$ von 0,7 μm bis 1,5 μm und einem Partikelgehalt von 0,1 bis 0,7 Gew.-% enthält.

Die Gesamtfoliendicke beträgt bevorzugt mind. 12 μm und maximal 75 μm. Besonders bevorzugt liegt die Foliendicke bei mindestens 19 μm und maximal 55 μm und idealerweise bei mindestens 20 μm und maximal 25 μm. Liegt die Foliendicke unter 12 μm, so reicht die Steifigkeit nicht aus, um diese gleichmäßig auf die Oberfläche aufbringen zu können und einen gleichmäßigen Transfer des Lackes auf das unterliegenden Substrat zu gewährleisten. Oberhalb von 75 μm wird die Folie zu steif und legt sich nicht mehr ausreichend an das Substrat an.

Die Folie ist mindestens dreischichtig, weist eine glatte Außenschicht und eine gegenüberliegende Calciumcarbonatpartikel-haltige Außenschicht auf. Dazwischen liegen mindestens eine Basisschicht und eventuell weitere Zwischenschichten.

Ein nur zweischichtiger Aufbau ohne die Basisschicht ist nicht möglich, da dadurch entweder die partikelhaltige Schicht zu dick werden müsste, was zu schlechten optischen Eigenschaften (Transparenz, Trübung) führt oder die glatte Schicht zu dick wäre, was eine wirtschaftliche Rückführung von Regenerat in die partikelhaltige Schicht nicht möglich machen würde.

Der Anteil der Basisschicht an der Gesamtfoliendicke beträgt bevorzugt mindestens 60 %, besonders bevorzugt mindestens 70 % und ganz besonders bevorzugt mindestens 80 %. Hierdurch ist eine wirtschaftliche Rückführung des anfallenden Regenrates erleichtert.

Die partikelhaltige Deckschicht A hat bevorzugt eine Mindestdicke von 0,8 μm und maximal 2,5 μm, besonders bevorzugt 1,0 μm bis 2,3 μm und ganz besonders bevorzugt 1,4 μm bis 2,1 μm dick. Unterhalb von 0,8 μm ist bei den weiter unten beschriebenen geeigneten Partikelgehalten das Erzielen eines ausreichend guten Wickelergebnisses nur schwer zu erreichen. Die Pigmentmenge ist dann möglicherweise nicht ausreichend. Oberhalb von 2,5 μm wird keine weitere Verbesserung des Wickelergebnisses durch Dickensteigerung erzielt und es kommt zu einer unerwünschten höheren Trübung und geringen Transparenz der Folie durch das Einbringen der Partikel.

Die glatte, weitgehend partikelfreie Deckschicht ist bevorzugt mindestens 1,8 μm dick, besonders bevorzugt mindestens 2,0 μm, ganz besonders bevorzugt mindestens 2,3 μm dick. Grundsätzlich bringt eine weitere Erhöhung der weitgehend partikelfreie Schichtdicke bis zu 7,0 μm eine weitere Verbesserung der Oberfläche, darüber hinaus wird keine weitere Verbesserung erzielt. Unterhalb von 1,8 μm drücken sich Partikel aus der Basisschicht durch die Deckschicht durch und erzeugen unerwünschte Erhebungen.

Das in der Folienproduktion anfallende Regenerat kann sowohl der partikelhaltigen Deckschicht A als auch der Basis zugeführt werden. Bevorzugt wird das Regenerat nur der Basisschicht zugeführt, das so keine oder eine nur geringe Beeinträchtigung der Oberfläche durch das zugeführte, partikelhaltige Regenerat stattfindet.

Wenn die Deckschichten zu dick werden, sinkt die Wirtschaftlichkeit, da Regenerate bevorzugt der Basis zugeführt werden sollten und bei zu geringer Basisdicke im Vergleich zur Gesamtdicke dieser Schichten dann prozentual zu viel Regenerat zugeführt werden muss, um den Regeneratkreislauf zu schließen

Die Deckschicht A enthält Calciumcarbonatpartikel bevorzugt in einer Menge von 0,1 Gew.-% bis 0,7 Gew.-%, besonders bevorzugt 0,2 Gew. % - 0,6 Gew.-% und ganz besonders bevorzugt 0,3 Gew.-% bis 0,45 Gew.-%. Unterhalb von 0,1 Gew.-% ist eine ausreichende Wickelhilfe durch die Partikel nicht erreichbar. Oberhalb von 0,7 Gew.-% besteht die Gefahr der Agglomeratbildung, die sich beim Wickeln in die gegenüberliegende, glatte Schicht C einpressen können. Die Partikel haben bevorzugt einen Durchmesser von 0,7 μm bis 1,5 μm, besonders bevorzugt 0,8 μm bis 1,3 μm und ganz besonders bevorzugt 0,9 μm bis 1,2 μm. Kleinere Partikel als 0,7 μm führen zu einem deutlich verschlechterten Wickelergebnis, und größere Partikel als 1,5 μm führen zu tiefen Verprägungen beim Wickeln in der dann gegenüberliegenden, glatten Schicht.

Bevorzugt werden hierbei synthetische und nicht natürliche Partikel verwendet, da bei der Herstellung synthetischer Calciumcarbonatpartikel eine gleichmäßigere Partikelverteilung erreicht werden kann. Besonders bevorzugt werden dabei oberflächenmodifizierte Calciumcarbonatpartikel verwendet, insbesondere Vaterit, wie sie in EP-A-0 460 640 beschrieben sind. Solche Partikel sind zum Beispiel von der Firma Maruo Calcium Co., Ltd. 1455 Nishioka, Uozumi-cho, Akashi City, Hyogo erhältlich. Die Oberflächenbehandlung führt dabei zu einer besseren Einbindung der Calciumcarbonatpartikel in die Polyestermatrix und damit zu einer höheren Transparenz und geringeren Trübung, was für Anwendungen, die eine UV-Härtung (z.B. Lack) durch die Folie vorsehen, günstig ist.

Die Gesamtpartikelmenge, bezogen auf das Gesamtgewicht der Folie, liegt bei maximal 0,3 Gew. %, bevorzugt bei maximal 0,28 Gew.-% und besonders bevorzugt bei maximal 0,25 Gew.-%. Je höher der Gehalt an Partikel, desto größer ist die Trübung und desto geringer die Transparenz mit der beschriebenen, negativen Wirkung auf die UV-Aushärtung.

Weißfärbende, jedoch mit dem Hauptbestandteil Polyester inkompatible Polymere, wie Polypropylen, COC's, Polyethylen, Polystyrol etc. sind im Sinn der Erfindung zu weniger als 0,3 Gew.-% und idealerweise überhaupt nicht (zu 0 Gew.-%) enthalten, da diese zu einer deutlichen Erhöhung der Trübung und Verringerung der Transparenz führen.

Weißfärbende Partikel wie Titandioxid und Bariumsulfat sind in der Folie zu weniger als 0,2 Gew.-%, bevorzugt weniger als 0,1 Gew.-% und idealerweise gar nicht (zu 0 Gew.-%) enthalten, da sie die Transparenz insbesondere im UV-Bereich stark reduzieren.

Die Folie kann neben dem erfindungsgemäßen Calciumcarbonat weitere Partikel, z.B: Siliziumdioxid oder Aluminiumtrioxid enthalten, wobei der Gehalt solcher Partikel bevorzugt bei < 0,3 Gew.-%, besonders bevorzugt bei < 0,25 Gew.-% und insbesondere bei kleiner 0,01 Gew.-% bezogen auf das Gesamtgewicht der Folie liegt. Andere Partikel außer dem bevorzugten Calciumcarbonat führen zu einer Verringerung der Transparenz und einer Erhöhung der Trübung, weiterhin erhöht sich die Gefahr der Agglomeratbildung mit der Folge von Verprägungen in der glatten Folienseite.

Die glatte Folienseite bildende Schicht C <0,01 Gew.-% und insbesondere gar keine absichtlich zugegebene Partikel bezogen auf die Schicht C. Alle Partikel in der Schicht C erhöhen die Oberflächenrauheit und führen zu Verprägungen im übertragenen Lack. Die Schicht C kann Partikel enthalten, die aus dem bei der Herstellung des Polyesters verwendeten Katalysator stammen. Um auch diese Partikel weitgehend zu reduzieren, werden in der Schicht C die weiter unten beschrieben Polymere bevorzugt verwendet.

Das Polymer der Basisschicht B und der übrigen Schichten besteht bevorzugt zu mindestens 90 Gew.-%, besonders bevorzugt zu 95 Gew.-% aus einem thermoplastischen Polyester. Bevorzugt ist dabei ein Polyester aus Ethylenglykol und Terephthalsäure (= Polyethylenterephthalat, PET). Nicht geeignet sind Polyester, die Naphthalin-2,6-dicarbonsäure als Wiederholungseinheit enthalten, da diese zu einer unerwünschten UV-Absorption führen. Insbesondere fällt dies ins Gewicht, wenn der Anteil der Naphthalineinheiten in der Basisschicht über 3 Mol.-% liegt. Der Polyester kann weitere Monomere, wie Isophthalsäure oder Cyclohexandimethanol oder Ethylenglykol enthalten. Der Isophthalsäuregehalt in den Deckschichten liegt bei < 23 Gew.-%, besonders bevorzugt bei < 19 Gew.-% und insbesondere bei < 15 Gew.-%, da sonst die Gefahr der Übertragung von Polyester auf dem Lack besteht. Der Anteil an Cyclohexandimethanol liegt bevorzugt bei < 2 Gew.-%, da dies die Mechanik der Folie negativ beeinflusst. In einer bevorzugten Ausführungsform enthalten die Deckschichten < 2 Gew.-%, ganz besonders bevorzugt < 1,5 Gew.-% andere Monomere außer Ethylenglykol und Terephthalsäure, da bei Verwendung weiterer Monomere die Gefahr des Anquellens der Folienoberfläche bei der Aufbringung des Lackes besteht.

Bevorzugt im Sinne der Erfindung ist die Verwendung von auf der PTA-Route (purified therephthalic acid) hergestellten Polyestern, da bei der Verwendung von DMT-Polyestern (Dimethyltherephthalat) in der Regel mehr UV-aktive Nebenprodukte entstehen, die aus den genannten Gründen unerwünscht sind. Das Polymer der Deckschichten enthält in einer bevorzugten Ausführungsform kein Calcium als Umesterungskatalysator und kein Antimon als Polykondensationkatalysator, da diese zur Bildung großer Katalysatorprezipitate neigen, die zu Verprägungen in der glatten Schicht C führen können. Bevorzugt enthalten die beiden Außenschichten Polymere, die Titan-Verbindungen als Polykondensationskatalysator und Magnesium-Verbindungen oder Mangan-Verbindung als Umesterungskatalysatoren enthalten.

Für die Herstellung der erfindungsgemäßen Folie wird der SV-Wert des Polyesters zweckmäßigerweise so gewählt, dass die Folie einen SV-Wert von > 600, bevorzugt von > 650 und idealerweise von > 700 aufweist. Der SV-Wert der Folie ist dabei bevorzugt < 950 und besonders bevorzugt < 850. Liegt der SV-Wert unterhalb von 600, so wird die Folie schon bei der Herstellung so brüchig, dass es zu häufigen Abrissen kommt. Außerdem werden die weiter unten genannten mechanischen Festigkeiten bei geringerem SV-Wert nicht mehr sicher erreicht. Wenn die Folie einen höheren SV als 950 aufweist, dann wird das Polymer im Extruder so zäh, dass übermäßig hohe Ströme auftreten und es zu Druckschwankungen in der Extrusion kommt. Dies führt zu einer schlechten Laufsicherheit. Außerdem wird der Abrieb an den Extrusionswerkzeugen und an den Schneidwerkzeugen unverhältnismäßig hoch.

Die Folie muss zudem eine hohe Transmission im Wellenlängenbereich von 330 nm bis 400 nm aufweisen. Diese liegt bei jeder Wellenlänge im angegebenen Bereich bei größer 50 % bevorzugt bei größer 60 % und idealerweise bei größer 72 % (Verfahren s. Messmethoden).

Je höher die Transparenz im UV-Bereich, desto schneller und vollständiger erfolgt die UV-Aushärtung des Lackes durch die Folie hindurch. Die UV-Transparenz wird dabei sowohl durch die eingebrachte Gesamtpartikelmenge (siehe oben) reduziert, als auch durch die Auswahl des Polyesters beeinflusst. Bei Polyethylentherephthalatrohstoffen haben sich hierbei auf der PTA-Route hergestellte Rohstoffe, denen auf der dem Weg der DMT-Route hergestellten als überlegen bewiesen. Besonders ungünstig ist die Verwendung von Dimethylnaphthalat als Monomer oder das Einbringen von UV-Stabilisatoren oder optischen Aufhellern in die Folie.

Weiterhin führen gelbe Farbstoffe zu einer Reduktion der UV-Durchgängigkeit. Gelbe Abbauprodukte können auch bei der Regenerierung der Polyesterfolie entstehen. Daher liegt der Anteil an rückgeführtem Regenerat bevorzugt bei kleiner 70 Gew.-%, besonders bevorzugt bei kleiner 60 Gew.-%, insbesondere bei kleiner 55 Gew.-% bezogen auf das Gesamtgewicht des Extrudates (Polyester plus alle Zusatzstoffe) in allen Schichten. Die Gelbzahl YID der Folie ist bevorzugt kleiner 3,0, besonders bevorzugt < 2,0 und idealerweise < 1,7. Diese Werte sind durch die Verwendung der erfindungsgemäßen Partikel und Rohstoffe zu erreichen. Wenn zum Beispiel andere Materialien, z.B. inkompatible Polymere wie COC oder Polypropylen oder Bariumsulfat als Partikel verwendet werden, ist das Erreichen dieser Werte schwierig bis unmöglich.

Neben der Transparenz im UV-Bereich liegt die Transparenz der Folie nach ASTM D 1003-61 im sichtbaren Wellenlängenbereich zwischen 80 % bis 95 %, bevorzugt bei mindestens 85 %, besonders bevorzugt bei 88 %, da so eine Inspektion des Substrates und des aufgebrachten Lackes durch die Folie hindurch erleichtert wird. Aus dem gleichen Grund liegt die Trübung bevorzugt bei < 7 %, besonders bevorzugt bei < 6 % und insbesondere bei < 5 %. Eine höhere Trübung beeinträchtigt zudem die UV-Aushärtung.

Die erfindungsgemäße Transparenz und Trübung wird durch die Auswahl der Partikel (insbesondere der Partikelgröße) und dem Partikelgehalt (gegebenenfalls auch die Verteilung der Partikel über die Schichten s.o.), sowie durch die geeigneten Polymere und das unten stehende Herstellverfahren erreicht.

Für die Verwendung der erfindungsgemäßen Folie in der unten stehenden Anwendung ist die Rauheit der Folie von besonderer Bedeutung. Dabei liegt die Rauheit ausgedrückt durch den Sa-Wert der glatten Deckschicht C bei < 25 nm und Sp bei < 500 nm, bevorzugt bei Sa <23 nm und Sp bei < 450 nm, besonders bevorzugt bei Sa < 20 nm und Sp < 400 nm. Je geringer die Werte für Sa und Sp, desto höher ist die Oberflächengleichmäßigkeit des übertragenen Lackes und damit dessen Glanz.

Die Rauheit der mit Partikel versehenen Deckschicht A liegt bevorzugt bei Sa 25 nm bis 60 nm und Sp 500 nm bis 1500 nm, bevorzugt bei Sa 30 nm bis 55 nm und Sp 520 nm bis 1000 nm, besonders bevorzugt bei Sa 35 nm bis 55 nm und Sp 550 nm bis 900 nm. Liegt der Sa-Wert und Sp-Wert bei kleiner als 25 nm bzw. 300 nm, so wird kein ausreichendes Wickelergebnis erzielt, d.h. es bilden sich Falten, Längsrillen und andere Verdehnungen, die auf das Substrat übertragen werden können. Ist die Rauheit Sa und Sp größer als die Maximalwerte, so kommt es zum Durchdrücken der Partikel in die glatte Schicht, die zu einer ungenügenden Oberflächenqualität des Lackes führen können. Die beschriebenen Rauheiten werden durch den Einsatz der erfindungsgemäßen Partikel (insbesondere die Partikelgröße) und dem Partikelgehalt, sowie die Verteilung der Partikel über die Schichten s.o., sowie durch die geeigneten Polymere und das unten stehende Verfahren erreicht.

Die erfindungsgemäße Folie weist weiterhin bevorzugt einen E-Modul in beiden Folienrichtungen (TD und MD) von größer 3000 N/mm$^2$ und besonders bevorzugt von größer 3500 N/mm$^2$ und besonders bevorzugt (in mindestens einer Folienrichtung) von > 4000 N/mm$^2$ in Längs- und Querrichtung auf. Die F5-Werte (Kraft bei 5 % Dehnung) liegen bevorzugt in Längs- und Querrichtung bei über 80 N/mm$^2$ und besonders bevorzugt bei über 90 N/mm$^2$. Diese mechanischen Eigenschaften können durch Variation der Parameter der biaxialen Streckung der Folie im Rahmen der unten angegebenen Verfahrensbedingungen eingestellt und erhalten werden.

Folien mit den genannten mechanischen Eigenschaften werden in der Anwendung unter Zug nicht übermäßig verdehnt und bleiben gut führbar.

**Verfahren zur Herstellung**

Die Polyesterpolymere der einzelnen Schichten werden durch Polykondensation hergestellt, entweder ausgehend von Dicarbonsäuren und Diol oder - wenn auch weniger bevorzugt - ausgehend von den Estern der Dicarbonsäuren, vorzugweise den Dimethylestern, und Diol. Verwendbare Polyester haben bevorzugt SV-Werte im Bereich von 500 bis 1300, wobei die einzelnen Werte weniger wichtig sind, aber der mittlere SV-Wert der eingesetzten Rohstoffe größer als 700 sein muss und bevorzugt größer als 750 ist. Diese Werte werden zweckmäßig verwendet, um die oben beschriebenen SV-Werte der Folie zu erreichen.

Die Calciumcarbonatpartikel können bereits bei der Herstellung des Polyesters zugegeben werden. Hierzu werden die Partikel im Diol dispergiert, gegebenenfalls gemahlen, dekantiert oder/und filtriert und dem Reaktor, entweder im (Um)-Esterungs- oder Polykondensationsschritt zugegeben. Weniger bevorzugt kann ein konzentriertes partikelhaltiges Polyester-Masterbatch mit einem Zweischneckenextruder hergestellt werden und bei der Folienextrusion mit partikelfreiem Polyester verdünnt werden. Dies ist weniger bevorzugt, weil hier das Risiko der Agglomeratbildung steigt. Es hat sich dabei als günstig erwiesen, wenn keine Masterbatche eingesetzt werden, die weniger als 30 Gew.-% Polyester enthalten. Eine weitere - wenn auch weniger bevorzugte - Möglichkeit besteht darin, Partikel direkt bei der Folienextrusion in einem Zweischneckenextruder zuzugeben.

Wenn Einschneckenextruder verwendet werden, dann hat es sich als vorteilhaft erwiesen die Polyester vorher zu trocknen. Bei Verwendung eines Zweischneckenextruders mit Entgasungszone kann auf den Trocknungsschritt verzichtet werden.

Zunächst wird der Polyester der einzelnen Schichten in Extrudern komprimiert und verflüssigt. In einer bevorzugten Ausführungsform liegen die Schmelzetemperaturen (Temperatur gemessen in der Schmelze am Extruderausgang) zwischen 290°C bis 300°C. Bei Temperaturen über 300°C steigt die Gelbzahl, bei Temperaturen unterhalb von 290°C steigt das Risiko von unaufgeschmolzenen Polymeranteilen, die zu unerwünschten Oberflächenerhebungen führen können. Diese Temperatur wird über das Durchsatz -zu Umdrehungsverhältnis des Extruders eingestellt, bzw. über die Temperaturen der Extruderheizung. Diese jeweiligen Verhältnisse und Temperaturen sind vom eingesetzten Extrudertyp abhängig und vom Fachmann mit Hilfe der genannten Parameter einzustellen. Dann werden die Schmelzen in einer Mehrschichtdüse zu flachen Schmelzefilmen ausgeformt, durch eine Breitschlitzdüse gepresst und auf einer Kühlwalze und einer oder mehreren Abzugswalzen abgezogen, wobei sie abkühlt und sich verfestigt.

Die erfindungsgemäße Folie wird biaxial orientiert, d.h. biaxial gestreckt. Die biaxiale Verstreckung der Folie wird am häufigsten sequenziell durchgeführt. Dabei wird vorzugsweise erst in Längsrichtung (d.h. in Maschinenrichtung, = MD-Richtung) und anschließend in Querrichtung (d.h. senkrecht zur Maschinenrichtung, = TD-Richtung) verstreckt. Das Verstrecken in Längsrichtung lässt sich mit Hilfe zweier entsprechend dem angestrebten Streckverhältnis verschieden schnell laufenden Walzen durchführen. Zum Querverstrecken benutzt man im Allgemeinen einen entsprechenden Kluppenrahmen.

Die Temperatur, bei der die Streckung durchgeführt wird, kann in einem relativ großen Bereich variieren und richtet sich nach den gewünschten Eigenschaften der Folie. Im Allgemeinen wird die Streckung in Längsrichtung in einem Temperaturbereich von 80°C bis 130°C (Aufheiztemperaturen 80°C bis 130°C) und in Querrichtung in einem Temperaturbereich von 90°C (Beginn der Streckung) bis 140°C (Ende der Streckung) durchgeführt. Das Längsstreckverhältnis liegt im Bereich von 2,5:1 bis 4,5:1, bevorzugt von 2,8:1 bis 4,0:1. Ein Streckverhältnis oberhalb von 4,5 führt zu einer deutlich verschlechterten Herstellbarkeit (Abrisse). Das Querstreckverhältnis liegt allgemein im Bereich von 2,5:1 bis 5,0:1, bevorzugt von 3,2:1 bis 4:1. Zum Erreichen der gewünschten Folieneigenschaften hat es sich als vorteilhaft erwiesen, wenn die Strecktemperatur (in MD und TD) unter 125°C und bevorzugt unter 118°C liegt. Vor der Querstreckung können eine oder beide Oberfläche(n) der Folie nach den an sich bekannten Verfahren In-Line beschichtet werden. In einer bevorzugten Ausführungsform ist die Folie auf der unpigmentierten Seite unbeschichtet und in einer besonders bevorzugten Ausführungsform beidseitig unbeschichtet. Jede Beschichtung birgt das Risiko eines "Abklatschens" (=Übertragung) von Beschichtung oder Beschichtungskomponenten auf den Lack und damit auf das fertige Bauteil. Dieses ist unerwünscht.

Bei der nachfolgenden Thermofixierung wird die Folie über eine Zeitdauer von etwa 0,1 s bis 10 s unter Spannung bei einer Temperatur von 150°C bis 250°C gehalten. Anschließend wird die Folie in üblicher Weise aufgewickelt.

## Anwendung

Die erfindungsgemäßen Folien eignen sich hervorragend als Prozesshilfsfolie zur Erzeugung/Übertragung von glatten Lackoberflächen, insbesondere wenn die Lacke UV-gehärtet werden. Dabei wird der Lack auf die Folie oder auf das Bauteil aufgebracht, wobei die Aufbringung auf das Bauteil bevorzugt ist. In diesem Fall wird anschließend die Folie mit der glatten Seite unter Zug auf den Lack aufgebracht, ansonsten wird die Folie mit dem Lack auf das Bauteil aufgebracht.

Die Bauteile sind bevorzugt eben (nicht stark verformt). Bei der Aufbringung sind Verdehnungen der Folie zu vermeiden. Der Lack auf dem Bauteil wird anschließend durch die Folie hindurch durch UV-Strahlung gehärtet. Die Folie wird anschließend abgezogen.

## Analytik

Zur Charakterisierung der Rohstoffe und der Folien wurden die folgenden Messwerte benutzt:

## Messung des mittleren Partikel-Durchmessers $d_{50}$

Die Bestimmung des mittleren Durchmessers $d_{50}$ wird mittels Malvern Master Sizer 2000 am einzusetzenden Partikel durchgeführt.

Die Proben werden dazu in eine Küvette mit Wasser gegeben und diese dann in das Messgerät gestellt. Mittels Laser wird die Dispersion analysiert und aus dem Signal durch Vergleich mit einer Eichkurve die Partikelgrößenverteilung bestimmt. Die Partikelgrößenverteilung ist durch zwei Parameter gekennzeichnet, dem Medianwert $d_{50}$ (= Lagemaß für den Mittelwert) und dem Streumaß, der sog. SPAN98 (= Maß für die Streuung des Partikeldurchmessers). Der Messvorgang ist automatisch und beinhaltet auch die mathematische Bestimmung des $d_{50}$-Wertes. Der $d_{50}$-Wert wird dabei definitionsgemäß aus der (relativen) Summenkurve der Partikelgrößenverteilung bestimmt: Der Schnittpunkt des 50% Ordinatenwertes mit der Summenkurve liefert auf der Abszissenachse den gewünschten $d_{50}$-Wert.

REM oder TEM Messungen an der mittels dieser Partikel hergestellten Folie ergeben im Durchschnitt einen um 15 - 25% niedrigeren mittleren Partikeldurchmesser als die eingesetzten Partikel. Der Partikeldurchmesser der Partikel in der Folie lässt sich also aus den Partikeldurchmessern der zur Herstellung der Folie verwendeten Partikel berechnen.

## UV/Vis Spektren bzw. Transmission bei Wellenlänge x

Die Folien wurden in Transmission in einem UV/Vis Zweistrahlspektrometer (Lambda 12 oder 35) der Firma Perkin Eimer USA gemessen. Eine etwa (3 × 5) cm große Folienprobe wird dazu über eine Flachprobenhaltevorrichtung senkrecht zum Messstrahl in den Strahlengang eingelegt. Der Messstrahl führt über eine 50 mm-Ulbrichtkugel hin zum Detektor, wo die Intensität zur Bestimmung der Transparenz bei gewünschter Wellenlänge bestimmt wird.

Als Hintergrund dient Luft. Die Transmission wird bei der gewünschten Wellenlänge abgelesen.

**Trübung, Transparenz**

Die Prüfung dient zur Bestimmung der Trübung und Transparenz von Kunststoff-Folien, bei denen die optische Klarheit bzw. Trübung für den Gebrauchswert wesentlich ist. Die Messung erfolgt an dem Hazegard Hazemeter XL-21 1 der Fa. BYK Gardner nach ASTM D 1003-61.

**Gelbwert**

Der Gelbwert YID ist die Abweichung von der Farblosigkeit in Richtung "Gelb" und wird gemäß DIN 6167 gemessen.

**SV-Wert (standard viscosity)**

Die Standardviskosität SV (DCE) wurde, angelehnt an DIN 53 726, bei einer Konzentration von 1 % in Dichloressigsäure in einem Ubbelohde Viskosimeter bei 25 C gemessen. Aus der relativen Viskosität ($\eta_{rel}$) wird der dimensionslose SV-Wert wie folgt ermittelt:

$$SV = (\eta_{rel}-1) \times 1000$$

Folie bzw. Polymerrohstoffe wurden dazu in DCE gelöst. Der Anteil an Partikeln wurde mittels Aschebestimmung ermittelt und durch entsprechende Mehreinwaage korrigiert. D.h.:

$$Einwaage = (Einwagemenge\ laut\ Vorschrift) / ((100\text{-}Partikelgehalt\ in\ Gew.\text{-}\%)/100)$$

**Mechanische Eigenschaften**

Die mechanischen Eigenschaften wurden über Zugprüfung angelehnt an DIN EN ISO 572-1 und -3 (Probekörper Typ 2) an 100 mm × 15 mm großen Folienstreifen bestimmt.

**Optische Beurteilung der Oberflächengüte der glatten Seite C nach Wicklung**

Die produzierte Folie wird mindestens 5 Tage auf der gewickelten Kundenrolle gelagert und anschließend werden oben 20 Meter abgewickelt und in den folgenden Metern eine Fläche von mindestens 3 m² optisch inspiziert. Hierzu wird die Folie auf einen Tisch mit glatter Oberfläche so aufgelegt, dass die glatte Folienoberfläche vom Tisch weg ausgerichtet ist. Mindestens drei Prüfer betrachten die genannte Folienoberfläche unter einer starken Lampe unter verschiedenen Winkeln zwischen 10° und 90°. Wenn in der Folienoberfläche auf diese Weise Unebenheiten auffallen, werden diese markiert und anschließend im Elektronenmikroskop analysiert. Die Anzahl der so gefunden Erhebungen bzw. Vertiefungen wird als Anzahl pro m² bewertet. Hierbei gibt es die folgenden Bewertungsstufen: sehr schlecht, mittel und gut. Sehr schlecht bedeutet ≥ 20 Erhebungen und Vertiefungen/m², schlecht bedeutet ≥ 10 Erhebungen und Vertiefungen/m², mittel bedeutet ≥ 5 Erhebungen und Vertiefungen/m² und gut bedeutet < 5 Erhebungen und Vertiefungen/m².

**Rauheit Sa und Sp**

Die Topographie der Oberfläche wird mit einem Weißlicht-Interferometrie-Mikroskop der Firma Bruker, Typ Contour GT-KIA, nach ISO 25178-2 bestimmt. Gemessen wird eine Fläche von 0,95 mm × 1,27 mm (480 × 640 Pixel) bei 5,1-facher Vergrößerung. Zur Messung wird ein Folienstück von 10 × 10 cm Größe auf den Tisch des Mikroskops gelegt und zur Fixierung mit einem Metallring mit einem Durchmesser von 5 cm beschwert. Die Messung erfolgt im VSI-Modus (phase shifting interferometry). Die Messlänge in z-Richtung wird auf 25 μm festgelegt. Eine eventuelle Welligkeit des Musters wird herausgefiltert. Fehlende Messwerte an den Flanken der Erhebung werden rechnerisch ergänzt (data restore).

Sa ist der arithmetische Mittelwert der absoluten Ordinatenwerte innerhalb des Definitionsbereiches (A).

$$Sa = \frac{1}{A} \iint\limits_{A} |z(x,y)| \, dx \, dy$$

Die maximale Spitzenhöhe Sp ist der größte Wert der Spitzenhöhe innerhalb des Definitionsbereiches. Da der Messwert Sp empfindlich auf Ausreißer reagiert, werden mindestens fünf Messungen an einer Probe durchgeführt und alle Messungen mit einer Abweichung in Sp von + 50% vom Mittelwert aller Messungen werden verworfen. Der resultierende Mittelwert der verbleibenden Messungen wird als Sz-Wert angegeben.

**Beispiele**

Beispiel 1-4 und VB1-6

Die Polymermischungen werden bei 292°C aufgeschmolzen und durch eine Breitschlitzdüse auf eine auf 50°C temperierte Kühlwalze elektrostatisch angelegt. Anschließend wird sie bei folgenden Bedingungen längs- und dann quergestreckt:

| Längsstreckung | Aufheiztemperatur | 75 - 115 | °C |
|---|---|---|---|
| | Strecktemperatur | 115 | °C |
| | Längsstreckverhältnis | 3,8 | |
| Querstreckung | Aufheiztemperatur | 100 | °C |
| | Strecktemperatur | 112 | °C |
| | Querstreckverhältnis (inklusive Streckung 1.Fixierfeld) | 3,8 | |
| Fixierung | Temperatur | 237 - 150 | °C |
| | Dauer | 3 | s |
| Fixierung | Temperatur 1. Fixierfeld | 170 | °C |

In den Beispielen kommen die folgenden Rohstoffe zum Einsatz:

PET1 = Polyethylenterephthalatrohstoff aus Ethylenglykol und Terephthalsäure mit einem SV Wert von 820.

PET2 = Polyethylenterephthalatrohstoff aus Ethylenglykol und Terephthalsäure mit einem SV Wert von 790. Der Rohstoff enthält 1 Gew.% Calciumcarbonat Vaterit vom Hersteller Maruo, oberflächenbehandelt wie in Patent EP-A-0 460 640 beschrieben mit einem mittleren Partikeldurchmesser von 1,0 $\mu$m.

PET3 = Polyethylennaphthalatrohstoff aus Ethylenglykol und 2,6-Naphthalindicarbonsäure.

PET 4 = Polyethylenterephthalatrohstoff mit einem SV-Wert von 700 und 10 Gew.-% Siliziumdioxidpartikel Sylysia310 P mit einem d50 von 2,7 $\mu$m (Hersteller FUJI SILYSIA CHEMICAL LTD. Greenville NCIUSA) . Das $SiO_2$ wurde in einem Zweischneckenextruder in das Polyethylenterephthalat eingearbeitet

PET5 = Polyethylenterephthalatrohstoff mit einem SV-Wert von 710, der 25 Mol-% Isophthalsäure als Comonomer enthält.

PET6 = Cycloolefincopolymer (COC) der Fa. Ticona: Topas 6015S (COC bestehend aus 2-Norbornen und Ethylen mit einer Glasübergangstemperatur $T_g$ von etwa 160°C.

Die nachfolgende Tabelle 1 fasst die Rezepturen, Herstellbedingungen und resultierenden Folieneigenschaften zusammen:

## Tabelle 1

| Schicht | | Beispiel 1 | Beispiel 2 | Beispiel 3 | Beispiel 4 | VB1 | VB2 | VB3 | VB4 | VB5 | VB6 |
|---|---|---|---|---|---|---|---|---|---|---|---|
| Schicht | Foliendicke | 23 | 12,8 | 50 | 23 | 23 | 23 | 23 | 23 | 23 | 23 |
| | Dicke A | 1,8 | 1,9 | 2 | 1,8 | 1,8 | 1,8 | 1,8 | 1,8 | 1,8 | 1,8 |
| | Dicke B | 18 | 9 | 43 | 18 | 18 | 18 | 18 | 18 | 18 | 18 |
| | Dicke C | 3,2 | 1,9 | 5 | 3,2 | 3,2 | 3,2 | 3,2 | 3,2 | 3,2 | 3,2 |
| | Beschichtung | keine | keine | keine | keine | beidseitig inline Acrylat wie in EP0144948 | keine | keine | keine | keine | keine |
| A-Schicht | PET 1 [%] | 60 | 70 | 60 | 40 | 60 | 60 | 95 | 96 | 60 | 60 |
| | PET 2 [%] | 40 | 30 | 40 | 60 | 40 | 40 | 5 | | 40 | 40 |
| | PET 3 [%] | | | | | | | | | | |
| | PET 4 [%] | | | | | | | | 4 | | |
| | PET 5 [%] | | | | | | | | | | |
| | PET 6 [%] | | | | | | | | | | |
| B-Schicht | PET 1 [%] | 60 | 60 | 60 | 60 | 60 | 60 | 60 | 60 | 50 | 55 |
| | PET 2 [%] | | | | | | | | | | |
| | PET 3 [%] | | | | | | | | | 20 | |
| | PET 4 [%] | | | | | | | | | | |
| | PET 5 [%] | | | | | | | | | | |
| | PET 6 [%] | | | | | | | | | | 5 |
| | Eigenregenerat [%] | 40 | 40 | 40 | 40 | 40 | 40 | 40 | 40 | 30 | 40 |
| C-Schicht | PET 1 [%] | 100 | 100 | 100 | 100 | 100 | 30 | 100 | 100 | 100 | 100 |
| | PET 2 [%] | | | | | | | | | | |
| | PET 3 [%] | | | | | | | | | | |
| | PET 4 [%] | | | | | | | | | | |
| | PET 5 [%] | | | | | | | 70 | | | |
| | PET 6 [%] | | | | | | | | | | |
| Transparenz (Bahnmitte) | in % | 90 | 91 | 90 | 89 | 92 | 90,3 | 91 | 91 | 90 | 90 |
| Trübung | | 3 | 2,1 | 2,7 | 3,5 | 3,5 | 3 | 1,4 | 1,8 | 3,2 | 10 |
| Gelbzahl YID | | 1,3 | 1,1 | 1,3 | 1,5 | 1,3 | 1,3 | 1,2 | 1,2 | 2 | 3,7 |
| E-Modul MD | N/mm2 | 4600 | 4700 | 4200 | 4650 | 4600 | 4400 | 4600 | 4800 | 4700 | 4500 |
| E-Modul TD | N/mm2 | 5000 | 4900 | 5100 | 4900 | 5000 | 4800 | 5000 | 4900 | 4800 | 4850 |
| F5 MD | N/mm2 | 115 | 114 | 110 | 112 | 115 | 110 | 115 | 110 | 117 | 112 |
| F5 TD | N/mm2 | 104 | 102 | 105 | 105 | 104 | 100 | 104 | 115 | 105 | 100 |
| SV-Folie | | 740 | 750 | 745 | 735 | 740 | 720 | 760 | 750 | 755 | 725 |
| Transparenz Minimum zwischen 330 und 400 nm | in % | 76 | 77 | 66 | 70 | 76 | 76 | 77 | 80 | 10 | 76 |
| Rauheit Sa der Seite A | nm | 46 | 50 | 47 | 50 | 47 | 46 | 20 | 57 | 49 | 98 |
| Rauheit Sp der Seite A | nm | 790 | 850 | 580 | 880 | 800 | 795 | 250 | 3065 | 812 | 795 |
| Rauheit Sa der Seite C | nm | 14 | 16 | 6 | 15 | 14 | 18 | 10 | 22 | 14 | 10 |
| Rauheit Sp der Seite C | nm | 268 | 310 | 150 | 293 | 364 | 410 | 197 | 1350 | 272 | 348 |
| Optische Beurteilung | | gut | mittel | gut | gut | gut | mittel | gut | sehr schlecht | gut | gut |
| Wickelergebnis | | gut | noch gut | gut | gut | gut | nicht gut | schlecht | gut | gut | gut |
| Bemerkung | | | | | | Hergestellt Möbelplatten weisen optische Defekte auf, die von übertragenen Beschichtungskomponenten verursacht wurden. | Auf der Möbelplatte einzelne Oberflächen beschädigungen erkennbar, vermutlich durch Übertragung aus der glatten Seite C, da diese Schicht zu amorph ist. | Folie nicht defektfrei wickelbar | Folie für die Möbeloberflächenherstellung unbrauchbar, weil Lack voller Defekte | Lackaushärtung durch die Folie im geeigneten Prozesszeitfenster nicht möglich | Aushärtung im Rahmen des Herstellprozesses der Möbeloberfläche ungenügend. |

## Patentansprüche

1. Mindestens dreischichtige biaxial orientierte Polyesterfolie, enthaltend mindestens eine Basisschicht B, eine raue Deckschicht A und eine glatte Deckschicht C, wobei die Deckschichten A und C jeweils Außenschichten sind und auf den sich gegenüberliegenden Oberflächen der Basisschicht B angeordnet sind, **dadurch gekennzeichnet, dass** die Deckschicht A Calciumcarbonatpartikel enthält und eine Rauheit Sa ≥ 25 nm, Sp ≥ 500 nm (gemessen nach ISO 25178-2) aufweist, die Deckschicht C weniger als 0.01 Gew.-% Partikel enthält (wobei die Gewichtsprozentangaben sich auf die Masse jeweilige Schicht beziehen) und eine Rauheit Sa < 25 nm, Sp < 500 nm (gemessen nach ISO 25178-2) aufweist und wobei der Polyester, der zur Herstellung aller Schichten der mindestens dreischichtigen Polyesterfolie verwendet wird, keine von Naphthalin-2,6-dicarbonsäure abgeleiteten Einheiten als Wiederholungseinheit enthält und wobei die Folie insgesamt weniger als 0.3 Gew.-% (bezogen auf die Masse der Gesamtfolie) Partikel enthält.

2. Polyesterfolie nach Anspruch 1, wobei die raue Deckschicht A 0,1 bis 0,7 Gew.-% (bezogen auf die Masse der Deckschicht A) Calciumcarbonatpartikel einer Größe $d_{50}$ von 0,7 $\mu$m bis 1,5 $\mu$m - gemessen vor der Folienherstellung - enthält.

3. Polyesterfolie nach Anspruch 1 oder 2, wobei die Calciumcarbonatpartikel synthetische und nicht natürliche Partikel sind, die bevorzugt oberflächenmodifiziert sind.

4. Polyesterfolie nach Anspruch 1, 2 oder 3, wobei die Folie Partikel aus inkompatiblen Polymeren zu weniger als 0,3 Gew.-%, bevorzugt zu 0 Gew.-% (bezogen auf die Masse der Gesamtfolie) enthält.

5. Polyesterfolie nach einem der Ansprüche 1 bis 4, **dadurch gekennzeichnet, dass** die Folie Titandioxidpartikel und/oder Bariumsulfatpartikel zu weniger als 0,2 Gew.-%, bevorzugt zu weniger als 0,1 Gew.-% und besonders bevorzugt zu 0 Gew.-% (bezogen auf die Masse der Gesamtfolie) enthält.

6. Polyesterfolie nach einem der Ansprüche 1 bis 5, **dadurch gekennzeichnet, dass** die Folie Siliziumdioxidpartikel und/oder Aluminiumtrioxid zu weniger als 0,3 Gew.-%, bevorzugt zu weniger als 0,25 Gew.-% und besonders bevorzugt zu weniger als 0,01 Gew.-% (bezogen auf die Masse der Gesamtfolie) enthält.

7. Polyesterfolie nach einem der Ansprüche 1 bis 6, **dadurch gekennzeichnet, dass** die Folie neben den Calciumcarbonatpartikeln und solchen, die gegebenenfalls bei der Herstellung der verwendeten Polyester als Katalysatorrückstände anfallen, keine weiteren Partikel enthält.

8. Polyesterfolie nach einem der Ansprüche 1 bis 7, **dadurch gekennzeichnet, dass** die Deckschicht C lediglich Partikel enthält, die gegebenenfalls bei der Herstellung des verwendeten Polyesters als Katalysatorrückstände anfallen.

9. Polyesterfolie nach einem der Ansprüche 1 bis 8, **dadurch gekennzeichnet, dass** die Polyester, die zur Herstellung der Deckschichten der Folie verwendet werden, Isophthalsäure-abgeleitet Wiederholungseinheiten in einer Menge von < 23 Gew.-%, bevorzugt von < 19 Gew.-% und besonders bevorzugt von < 15 Gew.-% (bezogen auf die Masse der jeweiligen Deckschicht) enthalten und der Anteil an Cyclohexandimethanol-abgeleiteten Wiederholungseinheiten in den Polyestern der Gesamtfolie bei < 2 Gew.-% (bezogen auf die Masse der Gesamtfolie) liegt.

10. Polyesterfolie nach einem der Ansprüche 1 bis 9, **dadurch gekennzeichnet, dass** die Deckschichten < 2 Gew.-%, bevorzugt < 1,5 Gew.-% an Wiederholungseinheiten enthalten, die von Ethylenglykol- und Terephthalsäure-abgeleiteten Wiederholungseinheiten verschiedenen sind und/oder Polyester sind, die über die PTA-Route (purified therephthalic acid) hergestellt wurden.

11. Polyesterfolie nach einem der Ansprüche 1 bis 10, **dadurch gekennzeichnet, dass** für Herstellung der Polyester, die für die Deckschichten verwendet werden, Titanverbindungen als Polykondensationskatalysator und/oder Magnesiumverbindungen oder Mangan-Verbindungen als Umesterungskatalysatoren verwendet wurden.

12. Polyesterfolie nach einem der Ansprüche 1 bis 11, **dadurch gekennzeichnet, dass** der Anteil an rückgeführtem Regenerat kleiner 70 Gew.-%, bevorzugt kleiner 60 Gew.-% und besonders bevorzugt kleiner 55 Gew.-% (bezogen auf die Gesamtmasse des Extrudates in allen Schichten) beträgt und/oder dass die Gelbzahl YID der Folie kleiner 3,0 ist.

13. Mindestens dreischichtige biaxial orientierte Polyesterfolie nach Anspruch 1, enthaltend mindestens eine Basisschicht B, eine raue Deckschicht A und eine glatte Deckschicht C, wobei die Deckschichten A und C jeweils Außenschichten sind und auf den sich gegenüberliegenden Oberflächen der Basisschicht B angeordnet sind und wobei die Folie die folgenden Eigenschaften aufweist:

   • Eine Transparenz von 80 bis 95 %

• Eine Trübung von < 7 %
• Eine Gesamtfoliendicke von 12-75 µm
• Eine glatte Deckschicht C mit einer Rauheit Sa < 25 nm, Sp < 500 nm
• Eine glatte Deckschicht C mit einer Dicke von mindestens 1 µm
• Eine raue Deckschicht A mit einer Rauheit Sa ≥ 25 nm, Sp ≥ 500 nm; und
• Eine Transmission im Wellenlängenbereich von 330 nm bis 400 nm, die bei jeder Wellenlänge im angegebenen Bereich bei größer 50 % bevorzugt bei größer 60 % und besonders bevorzugt bei größer 72 % liegt.

14. Verwendung einer Folie nach einem der Ansprüche 1 bis 13 als Prozessfolie zur Übertragung von Oberflächeneigenschaften, insbesondere für Möbeloberflächen.


**Claims**

1. At least three-layer biaxially oriented polyester film comprising at least one base layer B, one rough outer layer A and one smooth outer layer C, where the outer layers A and C are respective external layers arranged on the opposite surfaces of the base layer B, **characterized in that**
the outer layer A comprises calcium carbonate particles and has roughness value Sa ≥ 25 nm, Sp ≥ 500 nm (measured to ISO 25178-2), the outer layer C comprises less than 0.01 % by weight of particles (where the percentage by weight data are based on the weight of the respective layer) and roughness value Sa < 25 nm, Sp < 500 nm (measured to ISO 25178-2), and where the polyester used for the production of all of the layers of the at least three-layer polyester film comprises, as repeating unit, no 2,6-naphthalenedicarboxylic-acid-derived units, and where the entire film comprises less than 0.3 % by weight (based on the weight of the entire film) of particles.

2. Polyester film according to Claim 1, where the rough outer layer A comprises from 0.1 to 0.7 % by weight (based on the weight of the outer layer A) of calcium carbonate particles of size $d_{50}$ from 0.7 µm to 1.5 µm - measured before film production.

3. Polyester film according to Claim 1 or 2, where the calcium carbonate particles are synthetic and not natural particles, preferably surface-modified particles.

4. Polyester film according to Claim 1, 2 or 3, where the film comprises less than 0.3 % by weight, preferably 0 % by weight (based on the weight of the entire film) of particles made of incompatible polymers.

5. Polyester film according to any of Claims 1 to 9, **characterized in that** the film comprises less than 0.2 % by weight, preferably less than 0.1 % by weight and particularly preferably 0 % by weight (based on the weight of the entire film) of titanium dioxide particles and/or barium sulfate particles.

6. Polyester film according to any of Claims 1 to 5, **characterized in that** the film comprises less than 0.3 % by weight, preferably less than 0.25 % by weight and particularly preferably less than 0.01 % by weight (based on the weight of the entire film) of silicon dioxide particles and/or aluminium trioxide.

7. Polyester film according to any of Claims 1 to 5, **characterized in that** the film comprises no particles other than the calcium carbonate particles and particles which may occur as catalyst residues in the production of the polyesters used.

8. Polyester film according to any of Claims 1 to 7, **characterized in that** the outer layer C comprises only particles that may occur as catalyst residues in the production of the polyester used.

9. Polyester film according to any of Claims 1 to 8, **characterized in that** the polyesters used for the production of the outer layers of the film comprise a quantity < 23 % by weight, preferably < 19 % by weight and particularly preferably < 15 % by weight (based on the weight of the respective outer layer) of isophthalic-acid-derived repeating units, and the proportion of cyclohexanedimethanol-derived repeating units in the polyesters of the entire film is < 2 % by weight (based on the weight of the entire film).

10. Polyester film according to any of Claims 1 to 9, **characterized in that** the outer layers comprise < 2 % by weight, preferably < 1.5 % by weight, of repeating units which differ from ethyleneglycol- and terephthalic-acid-derived repeating units, and/or are polyesters produced by way of the PTA (purified terephthalic acid) route.

**11.** Polyester film according to any of Claims 1 to 10, **characterized in that** production of the polyesters used for the outer layers used titanium compounds as polycondensation catalyst and/or used magnesium compounds or manganese compounds as transesterification catalysts.

**12.** Polyester film according to any of Claims 1 to 11, **characterized in that** the proportion of returned regrind is less than 70 % by weight, preferably less than 60 % by weight and particularly preferably less than 55 % by weight (based on the total weight of the extrudate in all of the layers) and/or that the Yellowness Index YID of the film is less than 3.0.

**13.** At least three-layer biaxially oriented polyester film according to Claim 1, comprising at least one base layer B, one rough outer layer A and one smooth outer layer C, where the outer layers A and C are respective external layers arranged on the opposite surfaces of the base layer B, and where the film has the following properties:

- transparency from 80 to 95 %
- haze < 7 %
- total film thickness from 12 to 75 $\mu$m
- a smooth outer layer C with roughness value Sa < 25 nm, Sp < 500 nm
- a smooth outer layer C with thickness at least 1 $\mu$m
- a rough outer layer A with roughness value Sa $\geq$ 25 nm, Sp $\geq$ 500 nm; and
- transmittance in the wavelength range from 330 nm to 400 nm that is greater than 50 % at each wavelength in the stated range, preferably greater than 60 % and particularly preferably greater than 72 %.

**14.** Use of a film according to any of Claims 1 to 13 as process film for the provision of surface properties, in particular for furniture surfaces.

**Revendications**

**1.** Film en polyester biaxialement orienté à au moins trois couches, comprenant au moins une couche de base B, une couche de couverture rugueuse A et une couche de couverture lisse C, les couches de couverture A et C étant chacune des couches extérieures et disposées sur les surfaces opposées de la couche de base B, **caractérisé en ce que** :
la couche de couverture A contient des particules de carbonate de calcium et présente une rugosité Sa $\geq$ 25 nm, Sp $\geq$ 500 nm (mesurée selon ISO 25178-2), la couche de couverture C contient moins de 0,01 % en poids de particules (les pourcentages en poids se rapportant à la masse de chaque couche respective) et présente une rugosité Sa < 25 nm, Sp < 500 nm (mesurée selon ISO 25178-2), et le polyester utilisé pour la fabrication de toutes les couches du film en polyester à au moins trois couches ne contient pas d'unités dérivées de l'acide naphtalène-2,6-dicarboxylique comme unité répétitive, et le film dans son ensemble contient moins de 0,3 % en poids (rapporté à la masse du film total) de particules.

**2.** Film en polyester selon la revendication 1, dans lequel la couche de couverture rugueuse A contient de 0,1 à 0,7 % en poids (rapporté à la masse de la couche de couverture A) de particules de carbonate de calcium d'une taille d50 de 0,7 $\mu$m à 1,5 $\mu$m, mesurée avant la fabrication du film.

**3.** Film en polyester selon la revendication 1 ou 2, dans lequel les particules de carbonate de calcium sont des particules synthétiques et non naturelles, préférentiellement modifiées en surface.

**4.** Film en polyester selon la revendication 1, 2 ou 3, dans lequel le film contient moins de 0,3 % en poids, de préférence 0 % en poids (rapporté à la masse du film total) de particules de polymères incompatibles.

**5.** Film en polyester selon l'une des revendications 1 à 4, **caractérisé en ce que** le film contient moins de 0,2 % en poids, de préférence moins de 0,1 % en poids et de manière particulièrement préférée 0 % en poids (rapporté à la masse du film total) de particules de dioxyde de titane et/ou de sulfate de baryum.

**6.** Film en polyester selon l'une des revendications 1 à 5, **caractérisé en ce que** le film contient moins de 0,3 % en poids, de préférence moins de 0,25 % en poids et de manière particulièrement préférée moins de 0,01 % en poids (rapporté à la masse du film total) de particules de dioxyde de silicium et/ou de trioxyde d'aluminium.

**7.** Film en polyester selon l'une des revendications 1 à 6, **caractérisé en ce que** le film ne contient pas d'autres particules que les particules de carbonate de calcium et celles qui peuvent éventuellement être produites lors de la fabrication des polyesters utilisés comme résidus de catalyseur.

8. Film en polyester selon l'une des revendications 1 à 7, **caractérisé en ce que** la couche de couverture C ne contient que des particules qui peuvent éventuellement être produites lors de la fabrication du polyester utilisé comme résidus de catalyseur.

9. Film en polyester selon l'une des revendications 1 à 8, **caractérisé en ce que** les polyesters utilisés pour la fabrication des couches de couverture du film contiennent des unités répétitives dérivées de l'acide isoph-talique en une quantité de < 23 % en poids, de préférence de < 19 % en poids et de manière particulièrement préférée de < 15 % en poids (rapporté à la masse de la couche de couverture respective) et la proportion d'unités répétitives dérivées du cyclohexanediméthanol dans les polyesters du film total est de < 2 % en poids (rapporté à la masse du film total).

10. Film en polyester selon l'une des revendications 1 à 9, **caractérisé en ce que** les couches de couverture contiennent < 2 % en poids, de préférence < 1,5 % en poids d'unités répétitives qui sont différentes des unités répétitives dérivées de l'éthylène glycol et de l'acide téréphtalique et/ou des polyesters fabriqués par la voie PTA (acide téréphtalique purifié).

11. Film en polyester selon l'une des revendications 1 à 10, **caractérisé en ce que** des composés du titane ont été utilisés comme catalyseur de polycondensation et/ou des composés du magnésium ou du manganèse ont été utilisés comme catalyseurs de transestérification pour la fabrication des polyesters utilisés pour les couches de couverture.

12. Film en polyester selon l'une des revendications 1 à 11, **caractérisé en ce que** la proportion de régénérat réintroduit est inférieure à 70 % en poids, de préférence inférieure à 60 % en poids et de manière particulièrement préférée inférieure à 55 % en poids (rapporté à la masse totale de l'extrudat dans toutes les couches) et/ou que l'indice de jaunissement YID du film est inférieur à 3,0.

13. Film en polyester biaxialement orienté à au moins trois couches selon la revendication 1, comprenant au moins une couche de base B, une couche de couverture rugueuse A et une couche de couverture lisse C, les couches de couverture A et C étant chacune des couches extérieures et disposées sur les surfaces opposées de la couche de base B, et le film présentant les propriétés suivantes :

 • une transparence de 80 à 95 %
 • une nébulosité de < 7 %
 • une épaisseur totale du film de 12 à 75 $\mu$m
 • une couche de couverture lisse C avec une rugosité Sa < 25 nm, Sp < 500 nm
 • une couche de couverture lisse C d'une épaisseur d'au moins 1 $\mu$m
 • une couche de couverture rugueuse A avec une rugosité Sa $\geq$ 25 nm, Sp $\geq$ 500 nm ; et
 • une transmission dans la plage de longueurs d'onde de 330 nm à 400 nm qui est supérieure à 50 % à chaque longueur d'onde dans la plage indiquée, de préférence supérieure à 60 % et de manière particulièrement préférée supérieure à 72 %.

14. Utilisation d'un film selon l'une des revendications 1 à 13 comme film de traitement pour le transfert de propriétés de surface, en particulier pour les surfaces de meubles.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1410905 A
- EP 1884357 A
- EP 0983844 A2
- EP 0947982 A2
- EP 0460640 A